# EUROPEAN PATENT SPECIFICATION

(11) **EP 4 466 605 B1**
(45) Date of publication and mention of the grant of the patent: **04.03.2026**
(21) Application number: 22829827.9
(22) Date of filing: 14.12.2022
(51) Int. Cl.: G06F 9/30

(54) **DATA PROCESSING**
DATENVERARBEITUNG
TRAITEMENT DE DONNÉES

(30) Priority: 19.01.2022 GB 202200675
(43) Date of publication of application: 27.11.2024
(73) Proprietor: ARM Limited, Cambridgeshire CB1 9NJ (GB)
(72) Inventor: BISCONDI, Eric, 06410 Sophia Antipolis (FR); MARTINOT, Didier, 06410 Sophia Antipolis (FR); SAVAGE, Joe, Cambridge Cambridgeshire CB1 9NJ (GB)
(74) Representative: D Young & Co LLP
(86) International application number: PCT/GB2022/053215
(87) International publication number: WO 2023/139344

(56) References cited:
- EP-A2- 3 629 154
- GB-A- 2 594 971
- US-A1- 2017 337 156
- US-A1- 2019 250 915
- US-A1- 2021 042 261

## Description

### BACKGROUND

This disclosure relates to data processing.

Some data processing arrangements allow for vector processing operations, involving applying a single vector processing instruction to data items of a data vector having a plurality of data items at respective positions in the data vector. By contrast, scalar processing operates on, effectively, single data items rather than on data vectors. US 2019/250915 A1 discloses a computing machine using a matrix space for matrix and array processing. GB 2 594 971 A discloses variable position shift for matrix processing. US 2021/042261 A1 discloses a data processing apparatus which comprises processing circuitry to apply processing operations to one or more data items of a linear array comprising a plurality, n, of data items at respective positions in the linear array, the processing circuitry being configured to access an array of n×n storage locations.

### SUMMARY

The invention is defined by the appended claims.

### BRIEF DESCRIPTION OF THE DRAWINGS

The present technique will be described further, by way of example only, with reference to embodiments thereof as illustrated in the accompanying drawings, in which:
Figure 1 schematically illustrates a data processing apparatus;
Figures 2 schematically illustrates a storage array;
Figures 3 schematically illustrates storage locations within the storage array of Figure 2;
Figures 4 and 5 schematically illustrate linear array accesses;
Figure 6 schematically illustrates an addressing notation;
Figures 7 to 10 schematically illustrate further respective array access examples;
Figure 11 schematically illustrates a virtual machine; and
Figure 12 is a schematic flowchart representing a method.

### DESCRIPTION OF EMBODIMENTS

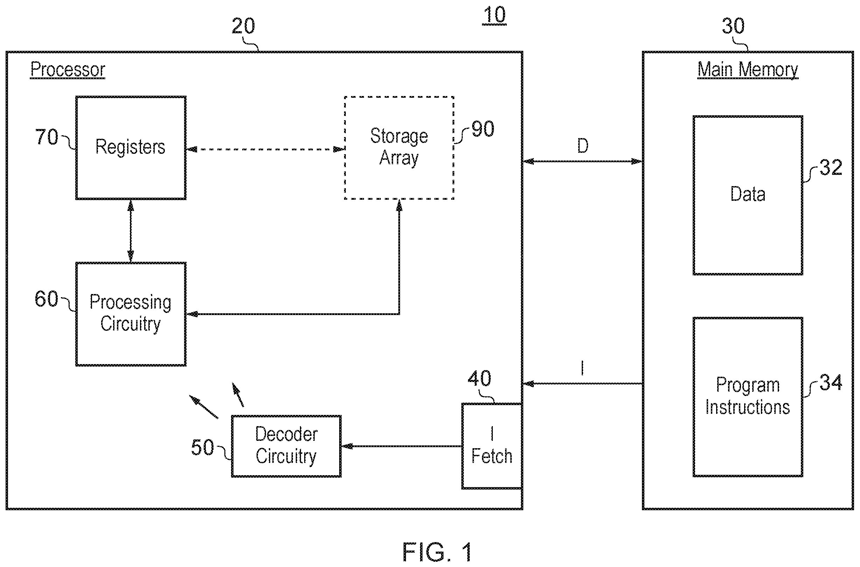

Referring now to the drawings, Figure 1 schematically illustrates a data processing system 10 comprising a processor 20 coupled to a memory 30 storing data values 32 and program instructions 34. The processor 20 includes an instruction fetch unit 40 for fetching program instructions 34 from the memory 30 and supplying the fetch program instructions to decoder circuitry 50. The decoder circuitry 50 decodes the fetched program instructions and generates control signals to control processing circuity 60 to perform processing operations upon registers stored within register circuity 70 as specified by the decoded vector instructions.

The processor 20 can access a storage array 90 of at least n x n storage locations. This is drawn in broken line to illustrate that it may or may not be provided as part of the processor 20. In various examples, the storage array can be implemented as any one or more of the following: architecturally-addressable registers; non-architecturally-addressable registers; a scratchpad memory; and a cache.

The processing circuitry 60 may be, for example vector processing circuitry and/or scalar processing circuitry. A general distinction between scalar processing and vector processing is as follows. Vector processing involves applying a single vector processing instruction to data items of a data vector having a plurality of data items at respective positions in the data vector. Scalar processing operates on, effectively, single data items rather than on data vectors. Vector processing can be useful in instances where processing operations are carried out on many different instances of the data to be processed. In a vector processing arrangement, a single instruction can be applied to multiple data items (of a data vector) at the same time. This can improve the efficiency and throughput of data processing compared to scalar processing.

The present techniques relate to processing two dimensional arrays of data items, stored in for example the storage array 90. The two-dimensional storage arrays may, in at least some examples, be accessed as vectors, for example of n elements.

In example embodiments, the storage array 90 may store a square array portion of a larger or even higher-dimensioned array or matrix of data items in memory.

Multiple instances of the storage array 90 (that is to say, two or more instances) may be provided so as to store multiple respective arrays of data items.

The discussion below relates to example program instructions 34. Embodiments of the present disclosure include an apparatus, for example of the type shown in Figure 1, operable or configured to decode and execute such program instructions. Figure 1 therefore provides an example of processing circuitry to selectively apply a processing operation to carry out functionality to be discussed below.

Optionally, where a vector processor is in use, the vector processing operations may be under the control of so-called predicates. Here, a respective predicate can control whether or not a particular vector function is applied in respect of one of the data item positions within the linear arrays (which could be treated as data vectors in this example arrangement).

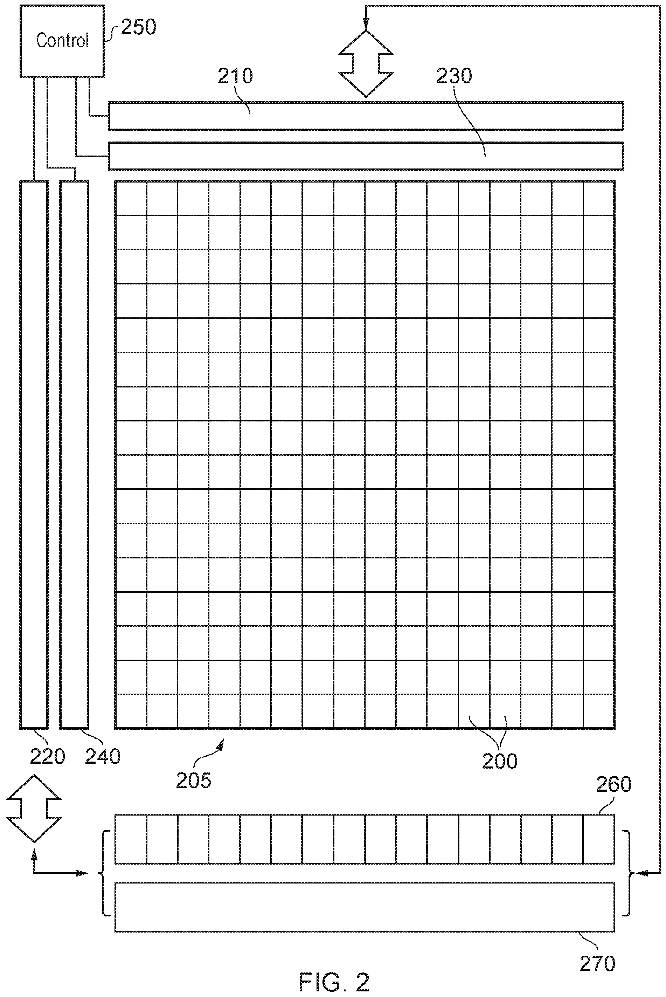

As discussed above, the processing circuitry 60 is arranged, under control of instructions decoded by decoder circuitry 50, to access the registers 70 and/or the storage array 90. Further details of this latter arrangement will now be described with reference to Figure 2.

In the present examples, the storage array 90 is arranged as an array 205 of at least n x n storage locations 200, where n is an integer greater than 1. In the present example, n is 16 which implies that the granularity of access to the storage locations 200 is 1/16^{th} of the total storage in either horizontal or vertical array directions. This aspect will be discussed further below.

### Example access as linear arrays

From the point of view of the processing circuitry, the array of n x n locations is accessible as n linear (one-dimensional) arrays in a first direction (for example, a horizontal direction as drawn) and n linear arrays in a second array direction (for example, a vertical direction as drawn). Each linear array has n elements so that each of the storage arrays stores a linear array of n data items. In other words, the n x n storage locations are arranged or at least accessible, from the point of view of the processing circuitry 60, as 2n linear array, each of n data items.

Therefore, this provides an example in which the array of n x n storage locations comprises an array of storage elements accessible by the instruction processing circuitry as 2n linear arrays, the 2n linear arrays comprising n linear arrays in the first array direction and n linear arrays in the second array direction, each linear array containing n data items (for example, though this is not a requirement, as a data vector register. Example instructions discussed below may specify one or more of the 2n linear arrays.

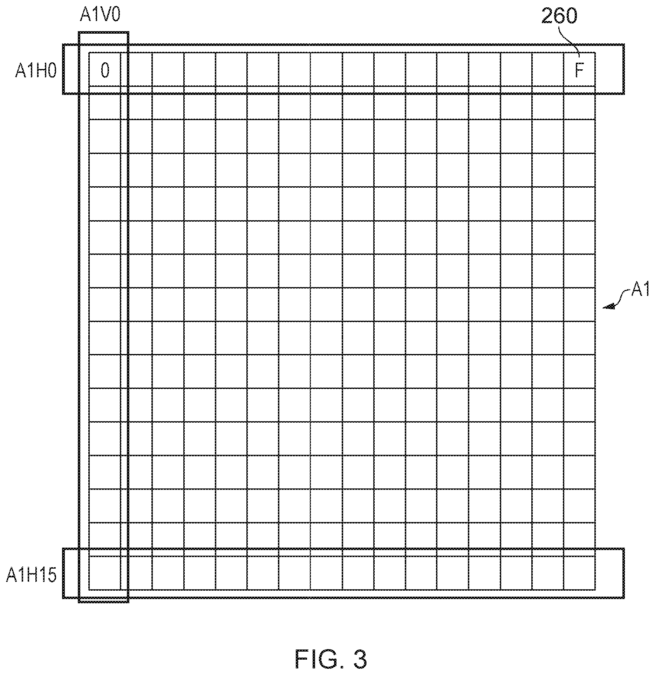

Implementations of these techniques will be discussed with reference to Figures 3 to 5 below. Further details are provided by US 11,074,214 B2.

### Further example access techniques

In further examples, rather than simply accessing a linear array as discussed above, access, for a vector of n vector elements, is made to a set of n storage locations each having a respective array location in the array register, the array location accessed for a given vector element of the vector being defined by one or more coordinates associated with the given vector element by one or more parameters of the array access instruction. Such a parameter may be, for example, a reference to an index vector or to a register storing such a vector of indices.

For example, the array location accessed for the given vector element of the vector may be defined by at least a pair of coordinates associated with the given vector element of the vector by parameters of the array access instruction. In examples, the pair of coordinates may define, for the given vector element of the vector, an array location in each of a first array direction and a second array direction different to the first array direction (for example, x and y directions as presented schematically below).

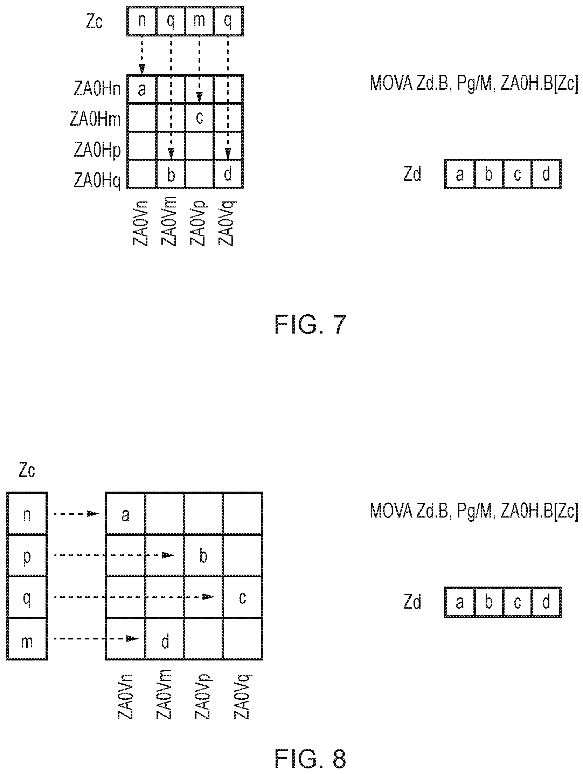

One of these coordinates could be implied by an element position or lane, in that the array location accessed for the given vector element of the vector may be defined by a coordinate in a first array direction dependent upon a vector position of the given vector element, and a coordinate in a second array direction different to the first array direction defined by a parameter of the array access instruction. This arrangement applies to the examples (such as that shown in Figure 7) in which one index vector is provided in a two-dimensional system; the other index is implied or provided by the vector element position.

In various examples, the second array direction may be orthogonal to the first array direction. Examples of horizontal rows and vertical columns are discussed here.

Where indexing is used in a direction or coordinate axis, the instruction decoder circuitry may be configured to select the first array direction and the second array direction from two candidate array directions in response to a parameter of the array access instruction. For example, the "HV" parameter discussed below can be used.

Predicated control of operation may optionally be used, in which the instruction processing circuitry is responsive to one or more sets of predicates associated with respective vector elements to control accessing of the array register in respect of the respective vector elements.

In example arrangements, techniques such as those defined by the so-called Scalable Vector Extension (SVE) or SVE2 arrangements by Arm Limited can be used so that the vector processing circuitry is configured to select the vector length applicable to the vector processing circuitry.

Implementations of these techniques will be discussed with reference to Figures 7 to 10 below.

### Access - circuitry examples

The array of storage locations 200 is accessible by access circuitry 210, 220, column selection circuitry 230 and row selection circuitry 240, under the control of control circuitry 250 in communication with at least the processing circuitry and optionally with the decoder circuitry 50.

In connection with a given access, it may be that only the access circuitry 210 or only the access circuitry 220 is active.

The types of access under discussion, applicable to any of the types of array access discussed here, including those discussed with reference to Figures 7 to 10, can be any of the following:
- a write access which takes data from a vector register 260 (of the registers 70 for example) having n elements and stores each element in a respective storage location 200 of the array;
- a write access which takes data items from a set 270 of n locations 32 of the memory 30 and stores each data item in a respective storage location 200 of the array;
- a read access which stores data retrieved from n storage locations 200 of the array to respective elements of the vector register 260;
- a read access which stores data retrieved from n storage locations 200 of the array to respective ones of the set 270 of n locations 32 of the memory 30.
In other words, the array access instruction may comprise an instruction selected from the list consisting of: a vector storage instruction to store data items to respective locations in the array register; and a vector retrieval instruction to retrieve data items from respective locations in the array register. The array access instruction may comprise a vector storage instruction to store vector elements of an input data vector to respective locations in the array register; or a vector retrieval instruction to retrieve data items of a set of memory locations of the main memory to respective vector elements of a destination data vector. Where the data processing apparatus comprises a main memory accessible by the vector processing circuitry, the vector storage instruction may comprise an instruction selected from the list consisting of: a first vector retrieval instruction to retrieve vector elements of an output data vector from respective locations in the array register; and a second vector retrieval instruction to retrieve data items to a set of memory locations of the main memory from respective locations in the array register.

Each of these types of access may be selectable by the use of a separate respective instruction or op-code, and/or by the use of respective parameters of an instruction. For example, a single instruction may provide for any of these accesses, with the direction (write or read as set out above) being defined by an instruction parameter, and with the source/destination (vector register or set of memory locations) being defined and/or identified by another parameter.

The writing to or reading from the register 260 or the set 270 of locations can be performed serially, for example one data item or element at a time in a predefined order, in parallel (all at substantially the same time) or in groups of, for example, 4 or 8 data items or elements in parallel. The routing of data items to or from vector elements or memory locations can be under the control of the access circuitry 210, 220 and/or the control circuitry 250.

In the drawings which follow, the register 260 and set 270 of memory locations is not drawn, purely for clarity of the representations.

### Implementation of example linear array accesses

With reference to Figure 3 and to US 11,074,214 B2 referenced above, the n linear arrays in the first direction (a horizontal or "H" direction as drawn), in the case of an example storage array 90 designated as "A1" are each of 16 data items 0...F (in hexadecimal notation) and may be referenced in this example as A1HO...A1H15. Note that there could be more than one such storage array 90 implemented, for example A0, A1, A2 and so on. The same underlying data, stored in the 256 entries (16 x 16 entries) of the storage array 90 A1 of Figure 3, may instead be referenced in the second direction (a vertical or "V" direction as drawn) as A1V0...A1V15. Note that, for example, a data item 260 is referenced as item F of A1H0 but item 0 of A1V15. Note that the use of "H" and "V" does not imply any spatial or physical layout requirement relating to the storage of the data elements making up the storage array 90, nor does it have any relevance to whether the storage arrays store row or column data in an example application involving matrix processing.

In example arrangements second array direction (for example vertical or horizontal as drawn in Figure 2) is orthogonal to the first array direction (for example horizontal or vertical respectively as drawn).

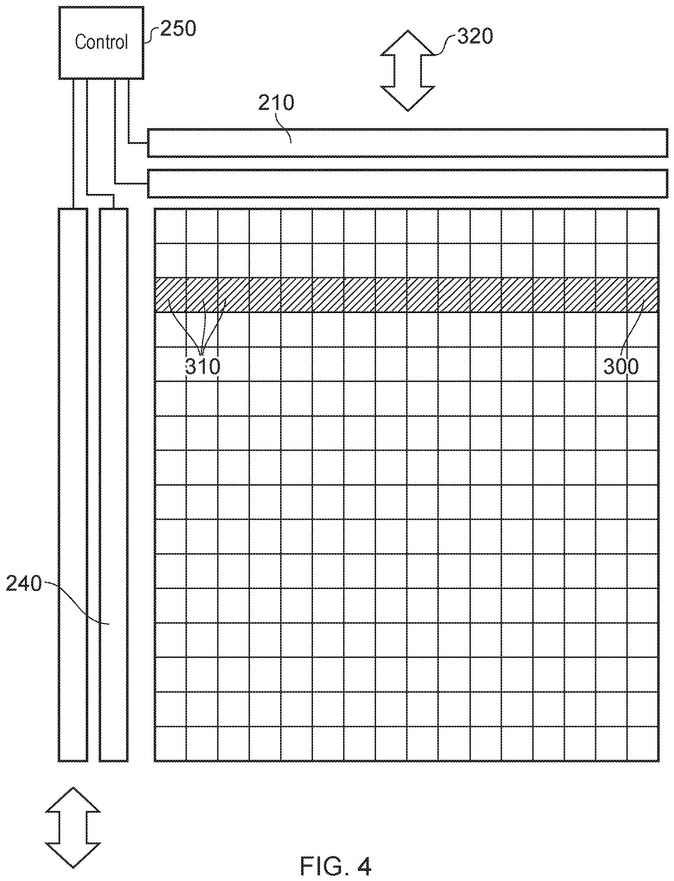

In order to access one of the linear arrays A1H0 ... A1H15 in the first direction, for example the horizontal direction as drawn, reference is made to Figure 4 in which an arbitrary linear array A1Hm 300 (where m is an arbitrary number between 0 and 15 in this example) is being accessed. Here, the row selection circuitry 240 is controlled by the control circuitry 250 to select the row of storage locations corresponding to the linear array 300, and the access circuitry 210 controls access (input or output) out of individual data items 310 of the linear array 300 to be provided via an interface 320 to the processing circuitry.

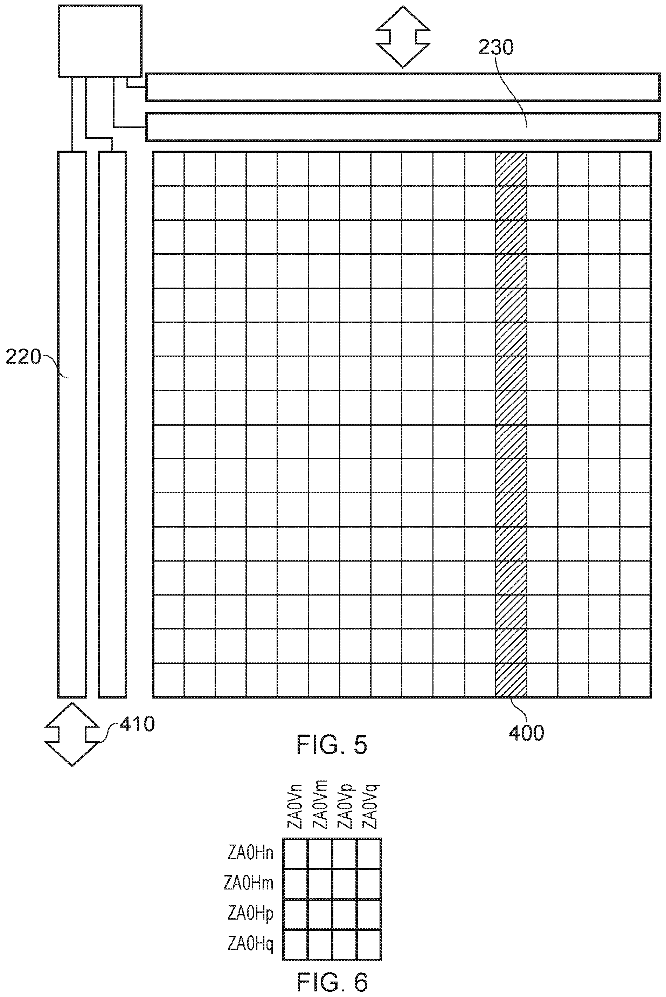

Similarly, with reference to Figure 5, in order to access an arbitrary linear array in the other direction as drawn, such as a linear array A1Vm 400, the column selection circuitry 230 selects the column of storage elements corresponding to the linear array 400 and data is read (output) via the access circuitry 220 to be interfaced with the processing circuitry by an interface 410.

The so-called granularity of the arrangement of Figures 3-5 will now be discussed. A linear array A1Hm represents 16 data items each of 32 bits. There are 16 such linear arrays, and each linear array A1Vm in the second array direction also has 16 entries of 32 bits. Instead, however, this storage could be arranged as (say) a vector of 64 data items of 8 bits in each direction. In other words, the granularity of access to the storage which provides the storage array 90 could be a granularity of 8 bits rather than a granularity of 32 bits. However, in the present examples, the granularity and the number of data items in each linear array in the first and second directions should be the same (16 in the first example, 64 in the second example).

Note that this is just an example arrangement for the purposes of the present explanation. In general, an example architecture may support a scalable or processor-selectable vector length as discussed above, for example with the processor 20 maintaining a variable VL indicative of the vector length in use. The value of VL is established or selected using techniques defined by the SVE / SVE2 arrangements discussed above. So while in this particular example an example vector length of 512 bits is used, in general, A1Hm represents (VL/32) items each of 32 bits, or even more generally (VL/ELEM_SIZE()) items of ELEM_SlZE() bits.

In example arrangements the instruction processing circuitry 60 is configured to store an input vector or linear array to the array of storage locations as a group (A1Hm) of n storage locations arranged in the first array direction; and is responsive to a data retrieval instruction, to retrieve, as a linear array, a set of n storage locations arranged in an array direction (A1Hm or A1Vm for example) selected, under control of the data retrieval instruction, from the set of candidate array directions; and the first array direction is a predetermined array direction (for example, horizontal as drawn). In other words, data writes are constrained to the first direction whereas data reads are allowed in either direction. But of course, another example arrangement could be provided in which data writes and data reads are allowed in either direction.

### Implementation of further example access techniques

The examples discussed above relate to accessing multi-dimensional storage arrays such as two-dimensional storage arrays in either the horizontal or the vertical directions so as to store or retrieve linear arrays with respect to the two-dimensional storage arrays.

In contrast to the linear array system discussed above, the array location accessed for a given vector element of the vector being defined by one or more coordinates associated with the given vector element by one or more parameters of the array access instruction. Such a parameter may be, for example, a reference to an index vector or to a register storing such a vector of indices.

Examples of the present techniques, to be discussed below, provide further instructions or variants of instructions which, when decoded and executed, provide for the use of one or more vectors of indices to perform indexed accesses by row (horizontal) and/or column (vertical) in order to store or gather individual elements from the storage array into (or from) a destination/source vector in a register or in memory.

In these examples, the apparatus of Figures 1 and 2, operating in accordance with the techniques described below, provides an example of data processing apparatus 10 comprising:
vector processing circuitry 20 to access an array register having at least n x n storage locations, where n is an integer greater than one, the vector processing circuitry comprising:
instruction decoder circuitry 50 to decode program instructions; and
instruction processing circuitry 60 to execute instructions decoded by the instruction decoder circuitry;
in which the instruction decoder circuitry 50 is responsive to an array access instruction, to control the instruction processing circuitry 60 to access, for a vector of n vector elements, a set of n storage locations each having a respective array location in the array register, the array location accessed for a given vector element of the vector being defined by one or more coordinates associated with the given vector element by one or more parameters of the array access instruction.

For the purposes of the following discussion, Figure 6 provides a representation of an example 4 x 4 storage array (where the array size of 4 x 4 is a simplification for the purposes of clarity of the diagrams, bearing in mind that an actual array size may be somewhat larger than 4 x 4 in a practical embodiment) in which the array is identified as ZA0; rows are identified by "H" plus an index n, m, p, q (for example 0-3); and columns are identified by "V" plus an index.

Figure 7 schematically illustrates a move (MOV) instruction which, as illustrated, moves data from the two-dimensional ZA0 array to a one-dimensional vector register Zd, according to a vector Zc of indices applicable to the vertical direction as drawn.

In order to generate elements of the destination vector Zd, each element is derived from a respective column ZA0V of the array ZA0 in Figure 7. For each such column, the index vector Zc defines a respective vertical coordinate or row from which to extract the data item applicable to that column. So, for the column ZA0Vn, the respective index element is n so that the element a is extracted from the row ZA0Hn. For the next-adjacent column ZA0Vm, the index is q so that the element b is extracted from the row ZA0Hq, and so on. Each of these operations is subject to predication so that a predicate vector defines whether, for each processing lane (corresponding to elements of Zd) the operation takes place as shown. If not, the predication arrangement can allow for that element of Zd to be zeroed or left unaltered. In this way, and assuming that the predication allows for all lanes to be processed, the destination vector Zd is assembled as [a b c d] by gathering four respective data values from storage locations defined by a horizontal position applicable to the position within the destination vector of the respective destination vector element and a vertical position defined by the respective element of the index vector Zc.

It will be understood that instead of a vertically-indexed access, a horizontally-indexed access arrangement could be used so that (again assuming that the predication allows for all lanes to be processed), the destination vector Zd is assembled by gathering four respective data values from storage locations defined by a vertical position applicable to the position within the destination vector of the respective destination vector element and a horizontal position defined by the respective element of the index vector Zc. An example of such an arrangement is illustrated schematically by Figure 8

The syntax used in these examples is as follows:

| | | | |
|---|---|---|---|
| MOVA | <Zd>.B, | <Pg>/M, | <ZAt><HV>.B[<Zc>] |

Here, MOVA represents an array move instruction. Zd is a destination vector register. B indicates a byte format in this example. Pg is a predicate register which controls operation for each vector lane. M is a modifier relating to the predicate operation, for example defining whether an inactive predicate indicates that the element at that lane should be set to zero or maintained at its previous value. ZAt defines the array in use (such as ZA0 as drawn). H or V defines whether the indexed access is in a horizontal or vertical direction. Once again, B indicates a byte format. Zc is a vector of indices.

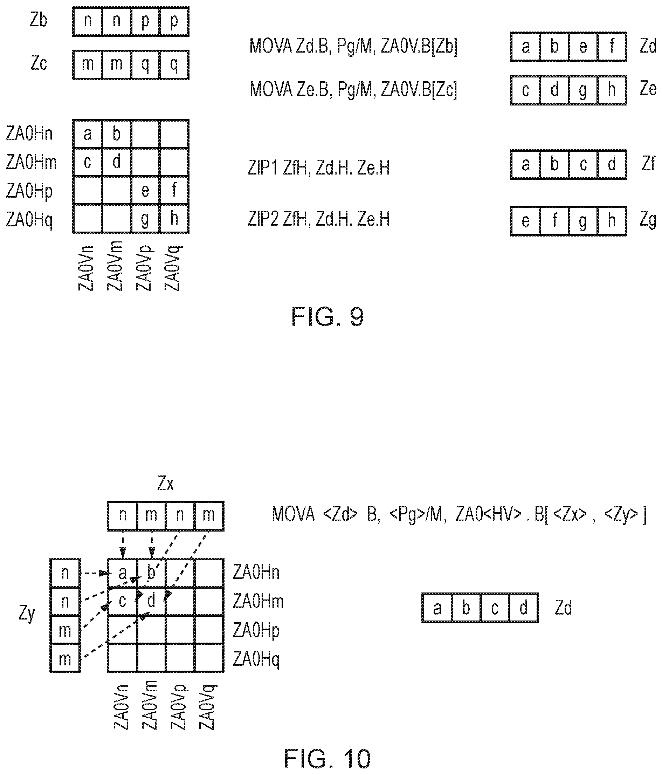

Figure 9 provides an example using two index vector is stored by respective vector registers Zb, Zc to access the array ZA0.

In a first operation, MOVA Zd.B, Pg/M, ZA0V.B[Zb], a destination register Zd is populated by [a b e f] using vertically indexed access to the array ZA0 according to the index vector Zb.

In a second operation, MOVA Ze.B, Pg/M, ZA0V.B[Zc], a destination register Ze is populated by [c d g h] using vertically indexed access to the array ZA0 according to the index vector Zc.

A previously proposed primary zip operation (ZIP1) populates a vector register Zf The ZIP1 instruction reads adjacent vector elements from the lower half of two source registers (in this case Zd and Ze as pairs, interleaves the pairs and places them into a vector, and writes the vector to the destination register Zf. The first pair from the first source register is placed into the two lowest vector elements, with subsequent pairs taken alternately from each source register.

A previously proposed secondary zip operation (ZIP2) populates a vector register Zg. The ZIP2 operation reads adjacent vector elements from the upper half of two source vector registers as pairs, interleaves the pairs and places them into a vector, and writes the vector to the destination vector register. The first pair from the first source register is placed into the two lowest vector elements, with subsequent pairs taken alternately from each source register.

A potential use of such instructions could be the extraction of small patches from a storage array, for example to provide processing for a patch of pixels from an image, or to extract the rows of small matrices produced by predicated outer product instructions, for example those smaller than the streaming vector length divided by the element size.

In a variant of the above operations, a move operation could be provided from a source vector register into the storage array, with the storage array locations to which data is moved from respective vector elements of the source vector register being defined by a horizontally or vertically indexed access using these same techniques. Here, the syntax may be similar to that discussed above, but using a "store" command with the destination being defined by indexed access into an array (an example being <ZAt><HV>.B[<Zc>] as used above) and the source being defined by a vector register (an example being <Zd>.B as used above). Once again, predication can be used in the same manner as described above.

In the present examples, the move instruction as discussed (MOVA) can operate in either direction between a vector register and a set of array locations, with the sense or direction of the operation (reading from the array locations or writing to the array locations) being defined by the ordering of the operands defining the origin and destination of the data (destination defined first, then origin, in the example syntax shown here). At least in the examples discussed here, however, a store operation to be described below is always from a set to array locations to memory.

Another variant is illustrated by the following example instruction:

| | | | |
|---|---|---|---|
| ST1W | { <ZAt><HV>.S[<Zc>] }, | <Pg>, | [<Xn\|SP>{,<Xm>, LSL #2}] |

Here, ST1W is a word-based store instruction. The suffix .S indicates a data element size in the vector, being selected from a list which may include (for example):
.B -> 8-bit elements
.H --> 16-bit elements
.S -> 32-bit elements
.D -> 64-bit elements
.Q -> 128-bit elements

The data destination is defined in the same way as discussed above, in that <ZAt><HV>.S[<Zc>] defines access into the array ZAt, either horizontally (H) or vertically (V) indexed by an index vector stored in Zc. Optional predication is provided by <Pg>. The expression [<Xn|SP>{,<Xm>, LSL #2}] provides a known definition (in the context of the SVE system) of a corresponding set of memory locations, by defining a base address (Xn or SP), then an offset (Xm) defined as a number of elements.

In the examples described above, the instruction decoder circuitry is responsive to an array access instruction (such as the move or store instructions discussed above), to control the instruction processing circuitry to access (for example read from or write to), for a vector of n vector elements (whether embodied in a vector register or in memory), a set of n storage locations each having a respective array location in the array register, the array location accessed for a given vector element of the vector being defined by one or more coordinates associated with the given vector element by one or more parameters of the array access instruction. Examples of such parameters include ><HV>.B[<Zc>], namely the index vector, for example in conjunction with the definition <HV> of horizontal or vertical indexing. In other examples given below, examples of such parameters may define respective indices (such as a pair of indices) in each of two (or indeed more) coordinate directions)

### Two-dimensional indexing examples

Any of the techniques discussed above may be used in the context of two-dimensional indexing. An example is illustrated schematically in Figure 10, in which, for providing access to an example storage array ZA0, a pair of index vectors is provided by respective vector registers Zx, Zy. In order to generate the destination vector (Zd) element at a particular lane or position, the pair of index vectors is accessed at that lane or position to generate a pair of (X, Y) coordinates defining an array storage location to be accessed (read from or stored to) relating to that lane or position.

Here, the syntax may be similar to that discussed above, except that both the H and V parameters may be set (to indicate indexing in both directions) and the pair of index registers defined as the source of the indexing information:

| | | | |
|---|---|---|---|
| MOVA | <Zd>.B, | <Pg>/M, | <ZAt><HV>.B[<Zx>, <Zy>.] |

In various embodiments the arrays can be implemented as any one or more of the following: architecturally-addressable registers; non-architecturally-addressable registers; a scratchpad memory; and a cache.

### More than two dimensions - examples

The techniques described here can be extended to arrays having more than two dimensions, for example 3-dimensional arrays such as n x n x n storage arrays. Here, one or more coordinates of storage locations to be accessed in respect of a vector element position or lane can be defined by an entry in an index vector, zero or more coordinates can be implied by the vector element position or lane, and zero or more coordinates can be specified by one or more parameters of the access instruction.

### Virtual machine example

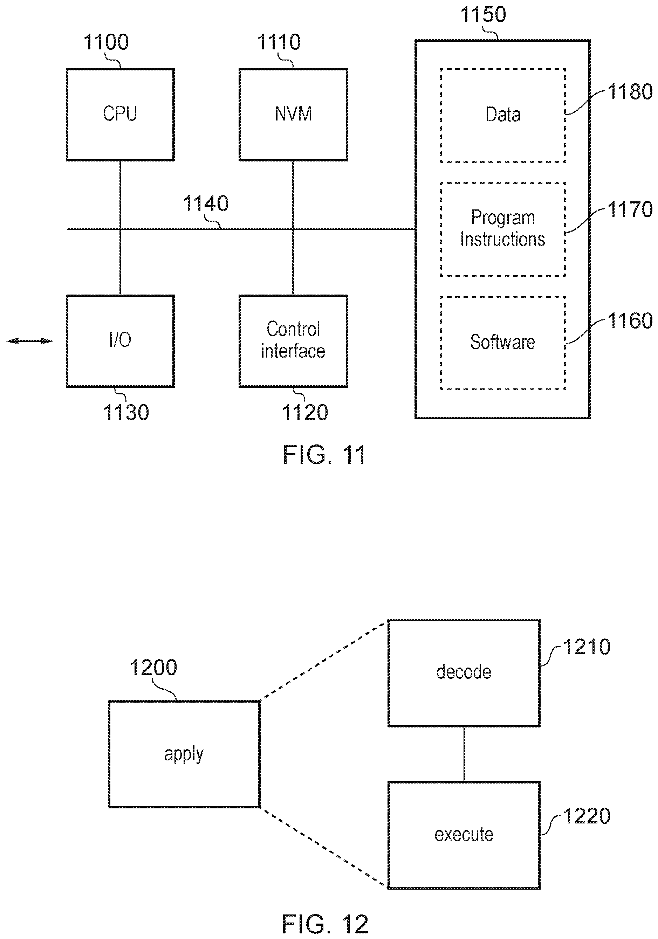

Figure 11 schematically illustrates a virtual machine by which some or all of the functionality discussed above may be provided. The virtual machine comprises a central processing unit (CPU) as an example of data processing circuitry 1100, a non-volatile memory 1110, a control interface 1120 and an input/output (IO) interface 1130, all interconnected by a bus arrangement 1140. A random access memory (RAM) 1150 stores program instructions providing software 1160 to control operations of the CPU 1100. Under the control of the software 1160, the CPU 1100 provides or emulates the functionality of one or more of the processing instructions discussed above. The RAM 1150 also stores program instructions 1170 and data 1180, where the program instructions 1170 are instructions applicable to the processor 20 of Figure 1 and which are interpreted, emulated or otherwise executed by the CPU 1100 acting as a virtual machine. The data 1180 is data corresponding to the data 32 of Figure 1 to be acted upon by (virtual) execution of the program instructions 1170. The arrangement of Figure 11 therefore provides an example of a virtual machine comprising a data processor (such as the CPU 1100) to execute a computer program comprising machine readable instructions (for example the software 1160), in which execution of the computer program causes the data processor to operate as a data processing apparatus of the type described above. Example embodiments are also represented by computer software which, when executed by a computer, causes the computer to carry out one or more of the techniques described here including the method of Figure 12 discussed below, and by a non-transitory machine readable storage medium which stores such computer software.

### Summary Method

The techniques described above may be implemented by the processing circuitry (which may comprise or may control the control circuitry) causing the control circuitry to control the access and selection circuitry 210, 220, 230, 240 to access the appropriate elements in the storage array.

By way of summary, Figure 12 is a schematic flowchart illustrating a data processing method comprising:
accessing (at a step 1200) an array register having at least n x n storage locations, where n is an integer greater than one, by:
decoding (at a step 1210) program instructions; and
executing (at a step 1220) instructions decoded by the decoding step;
in which the decoding step 1210 is responsive to an array access instruction, to control the executing step 1220 to access, for a vector of n vector elements, a set of n storage locations each having a respective array location in the array register, the array location accessed for a given vector element of the vector being defined by one or more coordinates associated with the given vector element by one or more parameters of the array access instruction.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments of the present techniques have been described in detail herein with reference to the accompanying drawings, it is to be understood that the present techniques are not limited to those precise embodiments, and that various changes, additions and modifications can be effected therein by one skilled in the art without departing from the scope of the techniques as defined by the appended claims. For example, various combinations of the features of the dependent claims could be made with the features of the independent claims without departing from the scope of the present techniques.

## Claims

1. Data processing apparatus (20) comprising:
vector processing circuitry (60) to access an array register (90) having at least n x n storage locations, where n is an integer greater than one, the vector processing circuitry comprising:
instruction decoder circuitry (50) to decode program instructions; and
instruction processing circuitry to execute instructions decoded by the instruction decoder circuitry;
in which the instruction decoder circuitry is responsive to an array access instruction, to control the instruction processing circuitry to access, for a vector of n vector elements, a set of n storage locations each having a respective array location in the array register, the array location accessed for each vector element of the vector being defined by one or more coordinates associated with that vector element by one or more parameters of the array access instruction.

2. The data processing apparatus of claim 1, in which the array location accessed for a given vector element of the vector is defined by at least a pair of coordinates associated with the given vector element of the vector by parameters of the array access instruction.

3. The data processing apparatus of claim 2, in which the pair of coordinates define, for the given vector element of the vector, an array location in each of a first array direction and a second array direction different to the first array direction.

4. The data processing apparatus of claim 1, in which the array location accessed for the given vector element of the vector is defined by a coordinate in a first array direction dependent upon a vector position of the given vector element, and a coordinate in a second array direction different to the first array direction defined by a parameter of the array access instruction.

5. The data processing apparatus of claim 4, in which the instruction decoder circuitry is configured to select the first array direction and the second array direction from two candidate array directions in response to a parameter of the array access instruction.

6. The data processing apparatus of claim 1, in which the array access instruction comprises an instruction selected from the list consisting of:
a vector storage instruction to store data items to respective locations in the array register; and
a vector retrieval instruction to retrieve data items from respective locations in the array register.

7. The data processing apparatus of claim 6, in which:
the data processing apparatus comprises a main memory (30) accessible by the vector processing circuitry.

8. The data processing apparatus of claim 6, in which the array access instruction comprises an instruction selected from the list consisting of:
a vector storage instruction to store vector elements of an input data vector to respective locations in the array register; and
a vector retrieval instruction to retrieve data items of a set of memory locations of the main memory to respective vector elements of a destination data vector.

9. The data processing apparatus of claim 7, in which the vector storage instruction comprises an instruction selected from the list consisting of:
a first vector retrieval instruction to retrieve vector elements of an output data vector from respective locations in the array register; and
a second vector retrieval instruction to retrieve data items to a set of memory locations of the main memory from respective locations in the array register.

10. The data processing apparatus of any one of the preceding claims, in which the instruction processing circuitry is responsive to one or more sets of predicates associated with respective vector elements to control accessing of the array register in respect of the respective vector elements.

11. The data processing apparatus of any one of the preceding claims, in which n depends upon a vector length applicable to the vector processing circuitry.

12. The data processing apparatus of claim 11, in which the vector processing circuitry is configured to select the vector length applicable to the vector processing circuitry.

13. A data processing method comprising:
accessing an array register (90) having at least n x n storage locations, where n is an integer greater than one, by:
decoding program instructions; and
executing instructions decoded by the decoding step;
in which the decoding step is responsive to an array access instruction, to control the executing step to access, for a vector of n vector elements, a set of n storage locations each having a respective array location in the array register, the array location accessed for each vector element of the vector being defined by one or more coordinates associated with that vector element by one or more parameters of the array access instruction.

14. A non-transitory machine readable storage medium comprising instructions which, when executed by the data processing apparatus according to claims 1-12, causes the data processing apparatus to carry out the method of claim 13.

## Patentansprüche

1. Datenverarbeitungseinrichtung (20), die umfasst:
eine Vektorverarbeitungs-Schaltungsanordnung (60), um auf ein Arrayregister (90) mit mindestens n x n Speicherorten zuzugreifen, wobei n eine ganze Zahl größer als eins ist, wobei die Vektorverarbeitungs-Schaltungsanordnung umfasst:
eine Anweisungsdecodier-Schaltungsanordnung (50), um Programmanweisungen zu decodieren; und
eine Anweisungsverarbeitungs-Schaltungsanordnung, um die von der Anweisungsdecodier-Schaltungsanordnung decodierten Anweisungen auszuführen;
wobei die Anweisungsdecodier-Schaltungsanordnung auf eine Arrayzugriffsanweisung reagiert, um die Anweisungsverarbeitungs-Schaltungsanordnung zu steuern, um für einen Vektor von n Vektorelementen auf einen Satz von n Speicherorten zuzugreifen, die jeweils einen jeweiligen Arrayort im Arrayregister aufweisen, wobei der Arrayort, auf den für jedes Vektorelement des Vektors zugegriffen wird, durch eine oder mehrere Koordinate(n) definiert ist, die mit dem Vektorelement durch einen oder mehrere Parameter der Arrayzugriffsanweisung assoziiert ist/sind.

2. Datenverarbeitungseinrichtung nach Anspruch 1, wobei der Arrayort, auf den für ein gegebenes Vektorelement des Vektors zugegriffen wird, durch mindestens ein Paar von Koordinaten definiert ist, die mit dem gegebenen Vektorelement des Vektors durch Parameter der Arrayzugriffsanweisung assoziiert sind.

3. Datenverarbeitungseinrichtung nach Anspruch 2, wobei das Paar von Koordinaten für das gegebene Vektorelement des Vektors einen Arrayort sowohl in einer ersten Arrayrichtung als auch in einer zweiten Arrayrichtung, die sich von der ersten Arrayrichtung unterscheidet, definiert.

4. Datenverarbeitungseinrichtung nach Anspruch 1, wobei der Arrayort, auf den für das gegebene Vektorelement des Vektors zugegriffen wird, durch eine Koordinate in einer ersten Arrayrichtung in Abhängigkeit von einer Vektorposition des gegebenen Vektorelements und eine Koordinate in einer zweiten Arrayrichtung, die sich von der ersten Arrayrichtung unterscheidet, die durch einen Parameter der Arrayzugriffsanweisung definiert ist, definiert ist.

5. Datenverarbeitungseinrichtung nach Anspruch 4, wobei die Anweisungsdecodier-Schaltungsanordnung dazu ausgelegt ist, die erste Arrayrichtung und die zweite Arrayrichtung aus zwei Kandidatenarrayrichtungen als Reaktion auf einen Parameter der Arrayzugriffsanweisung auszuwählen.

6. Datenverarbeitungseinrichtung nach Anspruch 1, wobei die Arrayzugriffsanweisung eine Anweisung umfasst, die aus der Liste ausgewählt ist, die besteht aus:
einer Vektorspeicheranweisung, um Datenelemente an jeweiligen Orten im Arrayregister zu speichern; und
einer Vektorabrufanweisung, um Datenelemente von jeweiligen Orten im Arrayregister abzurufen.

7. Datenverarbeitungseinrichtung nach Anspruch 6, wobei:
die Datenverarbeitungseinrichtung einen Hauptspeicher (30) umfasst, auf den die Vektorverarbeitungs-Schaltungsanordnung zugreifen kann.

8. Datenverarbeitungseinrichtung nach Anspruch 6, wobei die Arrayzugriffsanweisung eine Anweisung umfasst, die aus der Liste ausgewählt ist, die besteht aus:
einer Vektorspeicheranweisung, um Vektorelemente eines Eingabedatenvektors an jeweiligen Orten im Arrayregister zu speichern; und
einer Vektorabrufanweisung, um Datenelemente eines Satzes von Speicherorten des Hauptspeichers zu jeweiligen Vektorelementen eines Zieldatenvektors abzurufen.

9. Datenverarbeitungseinrichtung nach Anspruch 7, wobei die Vektorspeicheranweisung eine Anweisung umfasst, die aus der Liste ausgewählt ist, die besteht aus:
einer ersten Vektorabrufanweisung, um Vektorelemente eines Ausgabedatenvektors von jeweiligen Orten im Arrayregister abzurufen; und
einer zweiten Vektorabrufanweisung, um Datenelemente zu einem Satz von Speicherorten des Hauptspeichers von jeweiligen Orten im Arrayregister abzurufen.

10. Datenverarbeitungseinrichtung nach einem der vorhergehenden Ansprüche, wobei die Anweisungsverarbeitungs-Schaltungsanordnung auf einen Satz oder mehrere Sätze von Prädikaten, die mit jeweiligen Vektorelementen assoziiert sind, reagiert, um das Zugreifen auf das Arrayregister in Bezug auf die jeweiligen Vektorelemente zu steuern.

11. Datenverarbeitungseinrichtung nach einem der vorhergehenden Ansprüche, wobei n von einer Vektorlänge abhängt, die auf die Vektorverarbeitungs-Schaltungsanordnung anwendbar ist.

12. Datenverarbeitungseinrichtung nach Anspruch 11, wobei die Vektorverarbeitungs-Schaltungsanordnung dazu ausgelegt ist, die Vektorlänge auszuwählen, die auf die Vektorverarbeitungs-Schaltungsanordnung anwendbar ist.

13. Datenverarbeitungsverfahren, das umfasst:
Zugreifen auf ein Arrayregister (90) mit mindestens n x n Speicherorten, wo n eine ganze Zahl größer als eins ist, durch:
Decodieren von Programmanweisungen und
Ausführen von durch den Decodierschritt decodierten Anweisungen;
wobei der Decodierschritt auf eine Arrayzugriffsanweisung reagiert, um den Ausführungsschritt zu steuern, um für einen Vektor von n Vektorelementen auf einen Satz von n Speicherorten zuzugreifen, die jeweils einen jeweiligen Arrayort im Arrayregister aufweisen, wobei der Arrayort, auf den für jedes Vektorelement des Vektors zugegriffen wird, durch eine oder mehrere Koordinate(n) definiert ist, die mit dem Vektorelement durch einen oder mehrere Parameter der Arrayzugriffsanweisung assoziiert ist/sind.

14. Nichtflüchtiges maschinenlesbares Speichermedium, das Anweisungen umfasst, die, wenn sie durch die Datenverarbeitungseinrichtung nach einem der Ansprüche 1-12 ausgeführt werden, die Datenverarbeitungseinrichtung veranlassen, das Verfahren nach Anspruch 13 durchzuführen.

## Revendications

1. Appareil (20) de traitement de données comprenant :
des circuits de traitement vectoriel (60) permettant d'accéder à un registre tableau (90) ayant au moins n x n emplacements de stockage, n étant un entier supérieur à un, le circuit de traitement vectoriel comprenant :
des circuits de décodeur d'instructions (50) pour décoder des instructions de programme ; et
des circuits de traitement d'instructions pour exécuter des instructions décodées par les circuits de décodeur d'instructions ;
où les circuits de décodeur d'instructions réagissent à une instruction d'accès à un tableau, pour commander les circuits de traitement d'instructions afin d'accéder, pour un vecteur de n éléments vectoriels, à un ensemble de n emplacements de stockage ayant chacun un emplacement de tableau respectif dans le registre tableau, l'emplacement de tableau accédé pour chaque élément vectoriel du vecteur étant défini par une ou plusieurs coordonnées associées à cet élément vectoriel par un ou plusieurs paramètres de l'instruction d'accès au tableau.

2. Appareil de traitement de données selon la revendication 1, dans lequel l'emplacement de tableau auquel on accède pour un élément vectoriel donné du vecteur est défini par au moins une paire de coordonnées associées à l'élément vectoriel donné du vecteur par des paramètres de l'instruction d'accès au tableau.

3. Appareil de traitement de données selon la revendication 2, dans lequel la paire de coordonnées définit, pour l'élément vectoriel donné du vecteur, un emplacement de tableau dans chacune d'une première direction de tableau et d'une deuxième direction de tableau différente de la première direction de tableau.

4. Appareil de traitement de données selon la revendication 1, dans lequel l'emplacement de tableau auquel on accède pour l'élément vectoriel donné du vecteur est défini par une coordonnée dans une première direction de tableau dépendant d'une position vectorielle de l'élément vectoriel donné, et une coordonnée dans une deuxième direction de tableau différente de la première direction de tableau définie par un paramètre de l'instruction d'accès au tableau.

5. Appareil de traitement de données selon la revendication 4, dans lequel les circuits de décodeur d'instructions sont configurés pour sélectionner la première direction de tableau et la deuxième direction de tableau parmi deux directions de tableau candidates en réponse à un paramètre de l'instruction d'accès au tableau.

6. Appareil de traitement de données selon la revendication 1, dans lequel l'instruction d'accès au tableau comprend une instruction sélectionnée dans la liste constituée par :
une instruction de stockage vectoriel pour stocker des éléments de données à des emplacements respectifs dans le registre tableau ; et
une instruction de récupération de vecteur permettant de récupérer des éléments de données à des emplacements respectifs dans le registre tableau.

7. Appareil de traitement de données selon la revendication 6, dans lequel :
l'appareil de traitement de données comprend une mémoire principale (30) accessible par les circuits de traitement vectoriel.

8. Appareil de traitement de données selon la revendication 6, dans lequel l'instruction d'accès au tableau comprend une instruction sélectionnée dans la liste constituée par :
une instruction de stockage vectoriel pour stocker des éléments vectoriels d'un vecteur de données d'entrée à des emplacements respectifs dans le registre tableau ; et
une instruction de récupération de vecteur permettant de récupérer des éléments de données d'un ensemble d'emplacements de mémoire de la mémoire principale vers des éléments vectoriels respectifs d'un vecteur de données de destination.

9. Appareil de traitement de données selon la revendication 7, dans lequel l'instruction de stockage vectoriel comprend une instruction sélectionnée dans la liste constituée par :
une première instruction de récupération de vecteur permettant de récupérer des éléments vectoriels d'un vecteur de données de sortie à des emplacements respectifs dans le registre tableau ; et
une deuxième instruction de récupération de vecteur permettant de récupérer des éléments de données dans un ensemble d'emplacements de mémoire de la mémoire principale à des emplacements respectifs dans le registre tableau.

10. Appareil de traitement de données selon l'une quelconque des revendications précédentes, dans lequel les circuits de traitement d'instructions réagissent à un ou plusieurs ensembles de prédicats associés à des éléments vectoriels respectifs pour commander l'accès au registre tableau en ce qui concerne les éléments vectoriels respectifs.

11. Appareil de traitement de données selon l'une quelconque des revendications précédentes, dans lequel n dépend d'une longueur de vecteur applicable aux circuits de traitement vectoriel.

12. Appareil de traitement de données selon la revendication 11, dans lequel les circuits de traitement vectoriel sont configurés pour sélectionner la longueur de vecteur applicable aux circuits de traitement vectoriel.

13. Procédé de traitement de données comprenant les étapes suivantes :
accéder à un registre tableau (90) ayant au moins n x n emplacements de stockage, où n est un entier supérieur à un, par :
décodage d'instructions de programme ; et
exécution des instructions décodées par l'étape de décodage ;
où l'étape de décodage réagit à une instruction d'accès à un tableau, pour commander l'étape d'exécution afin d'accéder, pour un vecteur de n éléments vectoriels, à un ensemble de n emplacements de stockage ayant chacun un emplacement de tableau respectif dans le registre tableau, l'emplacement de tableau accédé pour chaque élément vectoriel du vecteur étant défini par une ou plusieurs coordonnées associées à cet élément vectoriel par un ou plusieurs paramètres de l'instruction d'accès au tableau.

14. Support de stockage non transitoire lisible par machine comprenant des instructions qui, lorsqu'elles sont exécutées par l'appareil de traitement de données selon les revendications 1 à 12, amènent l'appareil de traitement de données à exécuter le procédé de la revendication 13.
